# EUROPEAN PATENT APPLICATION

(11) **EP 1 954 041 A1**
(43) Date of publication of application: **06.08.2008**
(21) Application number: 06796675.4
(22) Date of filing: 23.08.2006
(51) Int. Cl.: H04N 5/91, G06F 17/30, G10L 11/00, G10L 15/10, G11B 20/10, G11B 27/00, G11B 27/10

(54) **DIGEST GENERATING DEVICE, AND PROGRAM THEREFOR**

(30) Priority: 30.09.2005 JP 2005287324
(71) Applicant: Pioneer Corporation, Tokyo 153-8654 (JP)
(72) Inventor: HASHIMOTO, Shinya, Tsurugashima-shi, Saitama 350-2288 (JP); NAKAMURA, Harumi, Tsurugashima-shi, Saitama 350-2288 (JP)
(74) Representative: Haley, Stephen
(86) International application number: PCT/JP2006/316511
(87) International publication number: WO 2007/039994

(57) **Abstract**

The present invention is directed to provide a digest generating device and a program therefor that can generate a digest that will not discourage a viewing incentive of a viewer.

The digest generating device includes a content acquiring section 20 for acquiring a content including at least one of video information and audio information, a high sound pressure segment searching unit 41 for searching a high sound pressure segment including a highlight scene from all the content segment of the acquired content, based on at least one of the video information and the audio information, a partial scene extracting unit 32 for extracting a partial scene being an element for generating a digest of the content from the remaining segment of the entire content segment excluding a highlight segment, and a digest generating unit 33 for generating the digest by using the extracted partial scene.

## Description

### TECHNICAL FIELD

The present invention relates to a digest generating device and a program therefor for generating a digest of a content including at least one of video information and audio information.

### BACKGROUND ART

In recent years, some recording and playback devices used for recording and playing back contents (such as television broadcast programs) including video information and audio information are known to generate and play back digests in which recorded contents are summarized. Because this digest playback can focus on playing back characteristic scenes such as a highlight scene in the recorded content, the digest playback has been used when a user wants to roughly understand what is in the content in a short period of time or for searching a program that he/she wants to watch.

In generating a digest, various proposals have been made as a method of extracting characteristic scenes. For example, in Patent Document 1 and Patent Document 2, a representative frame is extracted according to a frame in which a face region in an image exists, a frame with discontinuous images (frame after a scene change), and the like, and the digest is played back starting from the representative frame. Patent Document 3 focuses on audio information included in a content, and when a segment higher than a reference audio level to be referenced has continued for a predetermined period of time, the digest is played back by extracting the segment higher than the reference audio level.
[Patent Document 1] JP-A-2003-283993
[Patent Document 2] JP-A-9-312827
[Patent Document 3] JP-A-10-32776

### DISCLOSURE OF THE INVENTION

### Subject to be Solved by the Invention

However, the digest playback methods disclosed in the above-mentioned patent documents all extract characteristic scenes such as a frame in which a face region exists or a segment with a high audio level. Accordingly, there is a possibility that a scene of which a user does not desire may be included while the digest is played back for searching a desired program. For example, the result of a game may be included in the digest when a sport program was recorded, and the end may be included in the digest when a drama was recorded. Therefore, when a digest is used for searching a program, the playback of a digest that is close to a so-called program preview within the range that the conclusion of the content cannot be learned has been sought after.

In view of the above-described problems, the present invention provides a digest generating device and a program therefor that can generate a digest that will not discourage a viewing incentive of a viewer.

### Means for Solving the Problem

A digest generating device according to the present invention includes content acquiring means that acquires a content including at least one of video information and audio information, highlight segment searching means that searches a highlight segment including a highlight scene from the entire content segment along the time axis of the acquired content, based on at least one of the video information and the audio information, partial scene extracting means that extracts a partial scene being an element for generating a digest of the content from the remaining segment excluding the highlight segment from the entire content segment, and digest generating means that generates the digest by using the extracted partial scene.

With this configuration, a partial scene being an element for generating a digest is extracted from the remaining segment excluding a highlight segment including a highlight scene from the entire content segment. Accordingly, the highlight scene will not be included in the digest. As a result, a viewing incentive of a viewer will not be discouraged by viewing the generated digest that shows the characteristic contents and the conclusion of the content.

The "content" includes a content formed by video information and audio information (such as television programs), a content only formed by video information (such as silent movies), and a content only formed by audio information (such as music and radio programs). The "highlight scene" refers to characteristic scenes of the content such as a scene that fascinates the viewer most and an exciting scene, for example, the result of a sport program and the end of a drama. Related-art techniques such as a method of extracting a scene in which a face region is included in a video or a method of extracting a scene of which the audio level or the sound pressure level exceeds a reference value may be used for searching the highlight scene (highlight segment). The "digest" refers to summarized information in which what is in the content is summarized.

It is preferable that the digest generating device further include recording means that records the acquired content, and the highlight segment searching means search a highlight segment in synchronism with the recording by the recording means.

With this configuration, the highlight segment is searched for with the recording of the content. When the recording is finished, the searching of the highlight segment has finished. Therefore, compared to the case when the highlight segment is searched after the content is recorded, the time required for generating the digest can be reduced.

It is preferable that the digest generating device further include digest playback means that plays back a digest, and the digest generating means generate digest playback information formed by segment data that indicates an address of the start of the extracted partial scene and the segment length of the partial scene. It is also preferable that the digest playback means play back the digest based on the digest playback information and the recorded data of the content by the recording means.

With this configuration, the digest can be played back by reading out the partial scene that corresponds to the digest playback information from the recorded data of the content. In other words, there is no need to save data for the digest that is an extract of a part of the recorded data of the content separately from the recorded data of the content. Because only the segment data that indicates the address of the start of the partial scene and its segment length need to be saved, the memory usage for saving the digest can be reduced.

It is preferable that in the digest generating device, metadata recorded in each scene be associated with the content, and the highlight segment searching means search the highlight segment based on the metadata as well as at least one of the video information and the audio information.

With this configuration, the metadata is also considered along the video information and the audio information, thereby enabling to search the highlight segment including a highlight scene more accurately. The "metadata" not only includes information related to the description of what is in the entire content, the creator, the copyright, and the like, but also the detailed information of each scene included in the content.

It is preferable that in the digest generating device, the content include audio information, and the highlight segment searching means search a high sound pressure segment where the sound pressure level calculated based on the audio information is at or above a predetermined high sound threshold value as a highlight segment. It is also preferable that the partial scene extracting means extract a partial scene from a start that is earlier by a predetermined time ta (ta>0) than the start of the highlight segment.

With this configuration, the partial scene from the start that is earlier by the predetermined time ta (ta>0) than the start of the high sound pressure segment where the sound pressure level is at or above a predetermined threshold value, in other words, the scene prior to the highlight scene is extracted. As a result, a digest that includes a scene that supposedly increases the viewing incentive of a viewer can be generated.

It is preferable that in the digest generating device, the predetermined time ta be the time obtained by multiplying a segment length h1 (h1>0) of the highlight segment by a constant α (0<α<1).

With this configuration, the start of the partial scene to be extracted can be determined according to the segment length of the highlight segment. This is based on an empirical rule that when the highlight scene is long, the prior scene is also long.

It is preferable that in the digest generating device, the end of the partial scene be a point that is earlier by a predetermined time tb (0≤tb<ta) than the start of the highlight segment.

With this configuration, the end of the partial scene to be extracted is earlier by the predetermined time tb (0≤tb<ta) than the start of the highlight segment. For example, when the start of the partial scene to be extracted is decided according to the segment length of the highlight segment, the partial scene with a length according to the segment length (segment length: ta-tb) can be extracted.

It is preferable that in the digest generating device, the end of the partial scene be a point that a predetermined time tp (tp≤h1*α) corresponding to the segment length of the partial scene has passed from the start of the partial scene.

With this configuration, regardless of the length of the highlight segment, the partial scene with a fixed length (segment length: ta-tb) can be extracted. Therefore, when a plurality of partial scenes is included in the digest, a well-balanced digest with a fixed scene length can be generated.

It is preferable that in the digest generating device, when a plurality of highlight segments are detected by the highlight segment searching means, the digest generating means set a priority to the extracted partial scenes according to the segment length of each highlight segment to be referenced for extracting each partial scene, and incorporate the partial scene with higher priority as an element in the digest.

With this configuration, the partial scene extracted based on the highlight segment can be incorporated into the digest in the priority according to the segment length of the highlight segment. Therefore, the viewing incentive of a viewer can further be increased by preferentially incorporating a long highlight scene, in other words, a more exciting scene into the digest. When the highlight scene with a shorter length is preferentially incorporated into the digest, the digest with which the result of the content is harder to guess can be generated.

In this case, it is preferable to further include low sound pressure segment searching means that searches a low sound pressure segment where the sound pressure level calculated based on audio information is at or below a predetermined low sound threshold value, and non-program material scene extracting means that extracts a non-program material scene including a commercial scene from the entire content segment, based on the search result of the low sound segment searching means. It is also preferable that the partial scene extracting means extract a predetermined segment immediately after the extracted non-program material scene as an important partial scene, and the digest generating means set the priority of the important partial scene to the maximum value, and incorporate the important partial scene as an element in the digest.

With this configuration, the non-program material scene including a commercial scene is extracted based on the detected low sound pressure segment, and the scene immediately afterwards can be preferentially included in the digest as an important partial scene. For example, when the content is a cartoon program and the like, a title and a subtitle of the cartoon are often displayed immediately after commercial messages. By including these in the digest, the viewer can understand the contents more accurately. The "non-program material scene" refers to a segment considered not to be a program material of a content, such as a commercial scene, a weather forecast, and a segment of a program.

In this case, when a part or all of the partial scenes extracted by referring to the highlight segment is overlapped with the non-program material scene, the partial scene extracting means may delete the overlapped scene from the partial scene.

With this configuration, for example, when the partial scene extracted as the scene prior to the highlight scene is overlapped with a commercial scene, the partial scene excluding the commercial scene can be extracted. Therefore, the digest that does not include a non-program material scene without fail can be generated.

It is preferable that the digest generating device further include threshold value setting means that sets a high sound threshold value.

With this configuration, the high sound threshold value that is referenced for searching the high sound pressure segment can be set depending on the preference and the needs of a viewer.

It is preferable that in the digest generating device, among a plurality of partial scenes extracted by the partial scene extracting means, when a part or all of at least two partial scenes are overlapped, the digest generating means incorporate two or more overlapped partial scenes as one continuous partial scene into the digest.

With this configuration, even when the extracted partial scenes are overlapped, the same scene is not included in the digest. In other words, because the digest is generally used to efficiently understand the contents in a short period of time, a more appropriate digest can be generated in that matter.

It is preferable that in the digest generating device, the digest generating means rearrange, when generating the digest by using a plurality of partial scenes, the plurality of partial scenes in chronological order.

With this configuration, the extracted plurality of partial scenes are rearranged in chronological order.
Therefore, when the digest is played back, a sense of incongruity caused by continuously playing back partial scenes getting out of sequence can be removed. As a result, a digest closer to a program preview can be generated.

It is preferable that in the digest generating device, the partial scene extracting means extract a partial scene from a target segment that is any segment within the entire content segment.

It is also preferable that in the digest generating device, the target segment start from the start of the content and last for a time obtained by multiplying the entire content segment by a constant β (0<β<1).

With this configuration, the target segment where the partial scene is extracted can be narrowed down from the entire content segment. Accordingly, for example, when the result of a sport program is not desired to be included in the digest, by narrowing the target segment to the first half of the entire content segment (for the time obtained by multiplying the entire content segment by the constant β (0<β<1)), the result can be prevented from being included in the digest even more certainly.

It is preferable that in the digest generating device, the partial scene extracting means divide the entire content segment or the target segment into a plurality of small segments, and extract at least one partial scene from each small segment.

With this configuration, because at least one partial scene is extracted from a plurality of small segments, the partial scene can be extracted from the entire content segment or from the target segment in a balanced manner. In other words, even when a long highlight scene is in a part of the content, a digest that only includes the partial scene extracted based on the long highlight scene will not be generated.

A program according to the present invention realizes functions of each means in the digest generating device.

By using the program, it is possible to realize the digest generating device that can generate a digest that does not discourage a viewing incentive of a viewer.

### BRIEF DESCRIPTION OFDRAWINGS

Fig. 1 is a block configuration diagram of a recording and playback device according to an embodiment of the present invention.
Fig. 2 is a waveform diagram of a sound pressure level for explaining a method of extracting a partial scene.
Fig. 3 is a diagram for explaining a method of determining a priority when the partial scene is incorporated into a digest.
Fig. 4 is a flowchart showing a process of searching a high sound pressure segment.
Fig. 5 is a flowchart showing a process of generating a digest according to a first embodiment.
Fig. 6 is a waveform diagram of a sound pressure level for explaining another method of extracting a partial scene.
Fig. 7 is a waveform diagram of a sound pressure level for explaining a method of extracting overlapped partial scenes.
Fig. 8 is a waveform diagram of a sound pressure level for explaining another method of determining a priority of the partial scene.
Fig. 9 is a waveform diagram of a sound pressure level for explaining a method of extracting a partial scene from a target segment according to a second embodiment.
Fig. 10 is a flowchart showing a process of generating a digest according to the second embodiment.
Fig. 11 is a waveform diagram of a sound pressure level for explaining a method of extracting a partial scene from each small segment according to a third embodiment.
Fig. 12 is a flowchart showing a process of generating a digest according to the third embodiment.
Fig. 13 is a block configuration diagram of a recording and playback device according to a fourth embodiment.
Fig. 14 is a waveform diagram of a sound pressure level for explaining a method of extracting an important partial scene immediately after a non-program material scene according to the fourth embodiment.
Fig. 15 is a flowchart showing a process of generating a digest according to the fourth embodiment.

### Description of Reference Numerals

- 10: Recording and playback device
- 20: Content acquiring section
- 30: Control section
- 40: Audio analysis section
- 50: Storage section
- 60: Playback section
- 61: Content playback unit
- 62: Digest playback unit
- 81: Receiving antenna
- 82: External equipment
- 91: Display device
- 92: UI input device
- DCs: Start of a non-program material scene
- DCe: End of a non-program material scene
- Ds: Start of an entire content segment
- De: End of an entire content segment
- DHs: Start of a high sound pressure segment
- DHe: End of a high sound pressure segment
- DPs: Start of a partial scene
- DPe: End of a partial scene
- DPis: Start of an important partial scene
- DPie: End of an important partial scene
- hl: Segment length of a high sound pressure segment
- tp: Segment length of a partial scene
- T: Total of segment lengths
- THb: High sound threshold value
- THs: Low sound threshold value

### BEST MODES FOR CARRYING OUT THE INVENTION

Exemplary embodiments of a digest generating device and a program therefor according to the present invention will now be explained in detail below with reference to the accompanying drawings. The present invention has been made in view of extracting at least one highlight scene from the entire content segment of a content including video information (video signals) and/or audio information (audio signals), and extracting a partial scene being an element for generating a digest from the remaining segment excluding the highlight scene. An example of applying the digest generating device according to the present invention to a recording and playback device that records and plays back a content including video information and audio information will now be explained.

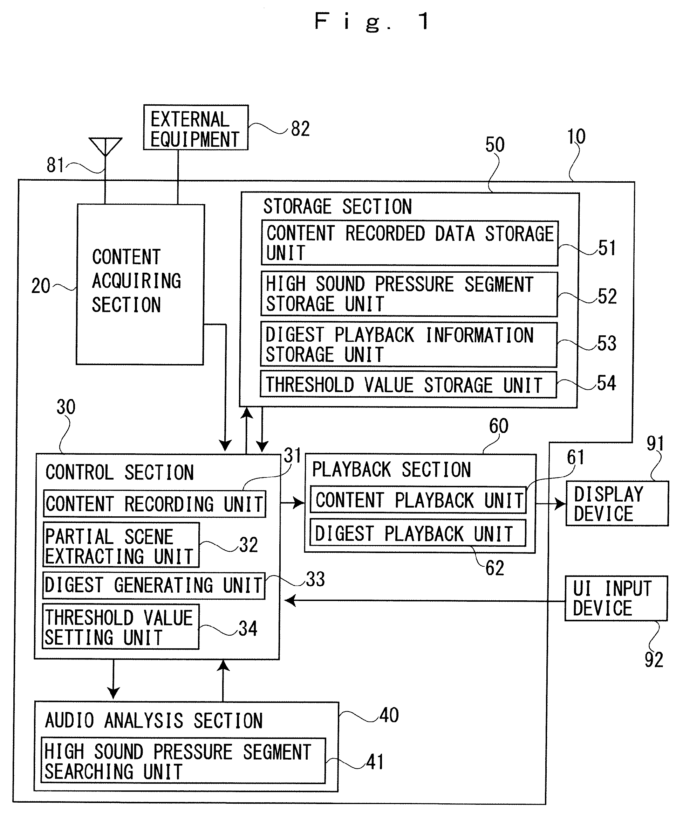

Fig. 1 is a block configuration diagram of a recording and playback device 10 according to an embodiment of the present invention. As shown in the diagram, the recording and playback device 10 includes a content acquiring section 20 for acquiring a content from outside, a control section 30 for carrying out various controls, an audio analysis section 40 for carrying out analysis based on audio information, a storage section 50 for storing various information, and a playback section 60 for playing back a content and a digest. The "digest," refers to summarized information in which what is in the content is summarized.

A main component of the content acquiring section 20 is a so-called tuner to receive a television broadcast such as terrestrial broadcast, BS, or CS through a receiving antenna 81. To acquire a content from external equipment 82 (such as a television set, a video playback device, a DVD playback device, a personal computer, and various tuners that include an external output terminal), an external input terminal is the main component. Although not shown, the content acquiring section 20 can also acquire video/music data distributed via a communication network such as the Internet as a content. In this case, an Internet connection part is the main component. When various semiconductor memory or various optical disk readers are installed as the content acquiring section 20, a content recorded therein can also be acquired.

The control section 30 carries out various controls by controlling each section of the recording and playback device 10. More specifically, the control section 30 includes a content recording unit 31 for recording an acquired content, a partial scene extracting unit 32 for extracting a partial scene being an element for generating a digest from the acquired content, a digest generating unit 33 for generating information (hereinafter, referred to as "digest playback information") to play back the digest based on the extracted partial scene, and a threshold value setting unit 34 for setting a threshold value that is a reference level for searching a highlight scene from the content.

The "highlight scene" refers to a characteristic scene of the content such as a scene that fascinates a viewer most and an exciting scene, for example, the result of a sport program or the end of a drama. In the present embodiment, the highlight scene is searched based on audio information. In other words, the excitement is determined by sound.

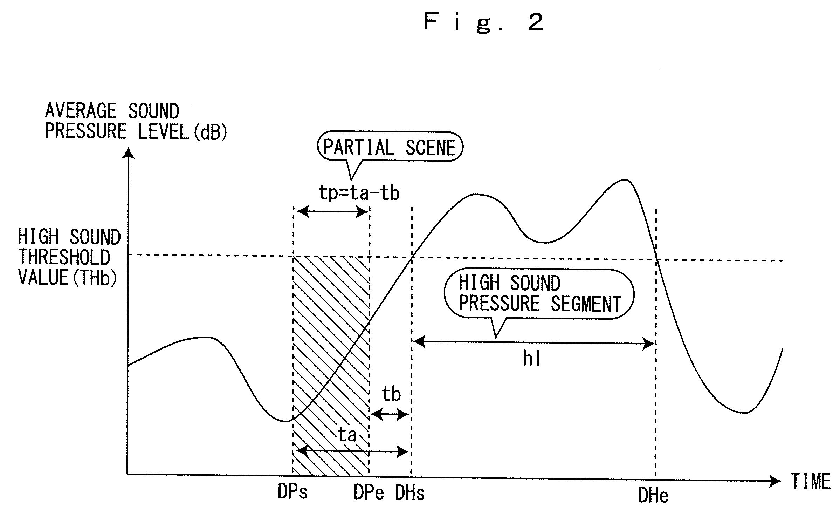

The audio analysis section 40 includes a high sound pressure segment searching unit 41 for searching a highlight scene (= highlight segment = high sound pressure segment) from a content. The audio analysis section 40 analyzes audio information (audio waveform information) included in the content, calculates an average sound pressure level (hereinafter, simply referred to as a "sound pressure level") per unit time, and produces a sound pressure level waveform as shown in Fig. 2, for example. The high sound pressure segment searching unit 41 searches a segment (hereinafter, referred to as a "high sound pressure segment") that is at or above a predetermined threshold value (hereinafter, referred to as a "high sound threshold value") set (stored in a threshold value storage unit 54, which will be described later) by the threshold value setting unit 34, based on the produced sound pressure level waveform.

The storage section 50 includes a content recorded data storage unit 51 for storing recorded data of the content (hereinafter, referred to as "content recorded data") recorded by the content recording unit 31, a high sound pressure segment storage unit 52 for storing the search result of the high sound pressure segment searching unit 41, a digest playback information storage unit 53 for storing digest playback information generated by the digest generating unit 33, and a threshold value storage unit 54 for storing the high sound threshold value set by the threshold value setting unit 34. The storage section 50 can be formed by a hard disk, various semiconductor memories, various optical disks, and the like, and the type is not limited.

The playback section 60 includes a content playback unit 61 for playing back the recorded content, and a digest playback unit 62 for playing back the digest. The content playback unit 61 plays back a content based on the content recorded data read out from the content recorded data storage unit 51, and displays the content on a display device 91. The digest playback unit 62 plays back a digest based on the digest playback information read out from the digest playback information storage unit 53 and the content recorded data, and also displays the digest on the display device 91.

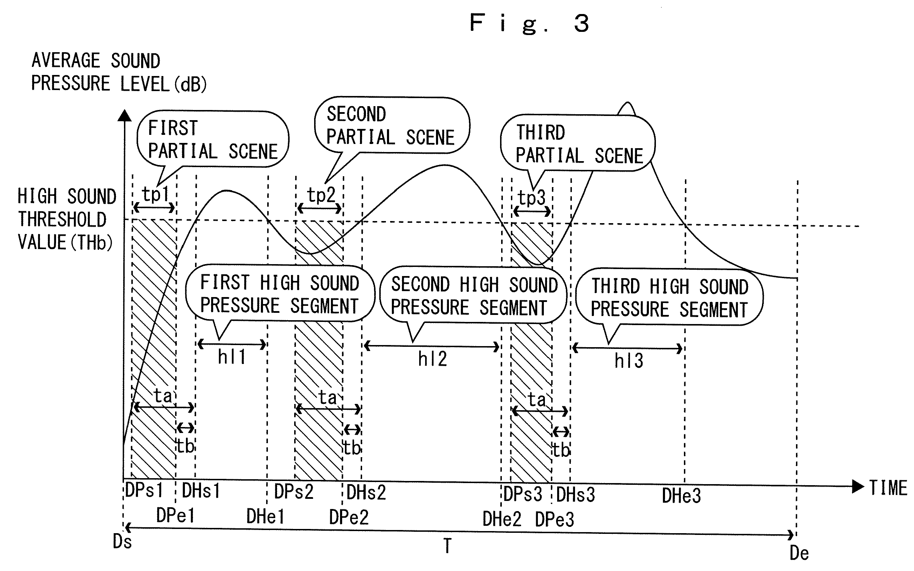

A series of processes of the recording and playback device 10 formed as described above will now be explained with reference to an example of a sound pressure level waveform shown in Figs. 2 and 3. For example, when a user (viewer) instructs to record a content using a user interface (UI) input device 92 such as a remote controller, the recording and playback device 10 acquires the content via the content acquiring section 20 and records the acquired content by the content recording unit 31. In synchronism with the recording of the content, the high sound pressure segment searching unit 41 searches a high sound pressure segment. More specifically, the high sound pressure segment searching unit 41 searches a high sound pressure segment where the sound pressure level is at or above a high sound threshold value (THb), and stores the data that indicates an address of the start (DHs) and its segment length (hl) in the high sound pressure segment storage unit 52 (see Fig. 2).

When the recording of the content is finished, the content recorded data is stored in the content recorded data storage unit 51. Then, the partial scene extracting unit 32 extracts a partial scene to be included in a digest, based on the data stored in the high sound pressure segment storage unit 52. As shown in Fig. 2, a segment (diagonal lines in the diagram) from start (DPs) that is earlier by a predetermined time ta than a start (DHs) of the high sound pressure segment to an end (DPe) that is earlier by a predetermined time tb (ta>tb≥0) than the start (DHs) of the high sound pressure segment is extracted as a partial scene. Therefore, the segment length of a partial scene to be extracted is represented by: tp=ta-tb.

Then, the digest generating unit 33 generates digest playback information based on the extraction result of the partial scene extracting unit 32. The digest generating unit 33 sets an order of priority according to the segment length (hl) of the high sound pressure segment that is referenced for extracting a partial scene and incorporates the scene into the digest in the order of priority. For example, as shown in Fig. 3, when three high sound pressure segments (segment lengths: hl1, hl2, and hl3) exist in the entire content segment (segment length: T, start: Ds, end: De) corresponding to the recording time, the partial scenes (segment lengths: tp1, tp2, and tp3) are extracted based on each high sound pressure segment. The partial scenes are then incorporated into the digest in the order of the segment lengths (in the order of: hl2, hl3, hl1) of the high sound pressure segments corresponding to the partial scenes. Therefore, the order of the priority of the partial scenes is in the order of: the second partial scene, the third partial scene, the first partial scene. The segment data that indicates the addresses of the starts (DPs2, DPs3, and DPs1) of respective partial scenes and their segment lengths (tp2, tp3, and tp1) is stored in the digest playback information storage unit 53 as digest playback information.

When a user instructs to play back a digest by using the UI input device 92 to search for a program that he/she wants to watch, the digest playback unit 62 reads out the segment corresponding to the segment data included in the digest playback information from the content recorded data read out from the content recorded data storage unit 51, and plays back the digest. Instead of generating a digest based on the digest playback information and the content recorded data, data for generating a digest may be generated separately, so that the digest can be played back based on the data.

When a user instructs to play back a content while playing back the digest, the content playback unit 61 plays back the content that is a source for generating the digest. The digest is not necessarily played back, and a content list is displayed on the display device 91, so that the content selected therefrom by a user can be played back.

The user may set a value of the high sound threshold value (THb) using the UI input device 92 (threshold value setting unit 34). The value of the high sound threshold value being set is stored in the threshold value storage unit 53 and referred to when the high sound pressure segment searching unit 41 carries out the search. The user may set, not only the high sound threshold value, but also the overall length of the digest to be generated and values (ta and tb) for determining the start and the end of the partial scene to be extracted, using the UI input device 92. However, if the high sound threshold value, the overall length of the digest, and the values of ta and tb are not particularly set by a user, default setting values will be used.

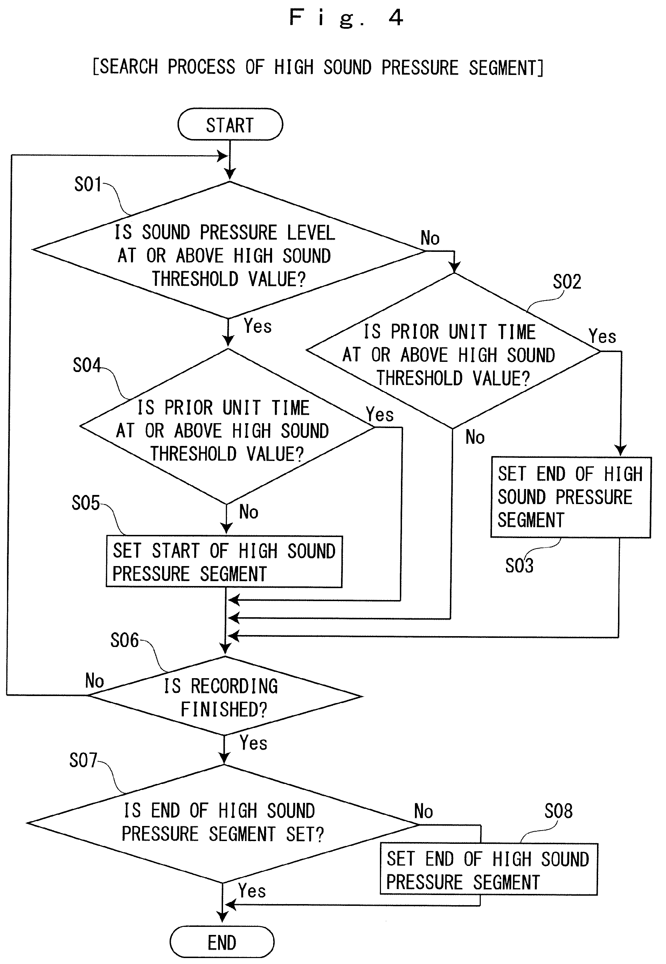

A search process of a high sound pressure segment by the high sound pressure segment searching unit 41 will now be explained with reference to the flowchart in Fig. 4. The process is executed at per unit time (for example, every 1/60 seconds), in synchronism with the recording of a content. As shown in the flowchart, whether the sound pressure level at a unit time is at or above the high sound threshold value being set is determined (S01). If it is not at or above the high sound threshold value (S01: No), whether the prior unit time is at or above the high sound threshold value is determined (S02). If it is at or above the high sound threshold value (S02: Yes), the end of the high sound pressure segment is set (S03).

If the sound pressure level of the unit time to be searched at this time is determined at or above the high sound threshold value (S01: Yes) at S01, whether the prior unit time is at or above the high sound threshold value is determined (S04). If it is not at or above the high sound threshold value (S04: No), the start of the high sound pressure segment is set (S05).

After setting the start or the end of the high sound pressure segment, or if the prior unit time is determined to be at or above the high sound threshold value at S04 (S04: Yes), or if the prior unit time is determined not to be at or above the high sound threshold value at S02 (S02: No), whether the recording of the content is finished is determined (S06). If it is not finished (S06: No), the above-described processes are repeated.

When the recording is finished (S06: Yes), whether the end of the high sound pressure segment is set is determined if the start of the high sound pressure segment is set at S05 (S07). If it is not set (S07: No), the end of the high sound pressure segment is set (S08), and the process is finished. In other words, when the recording is finished before setting the end of the high sound pressure segment, the end is set, and the process is finished.

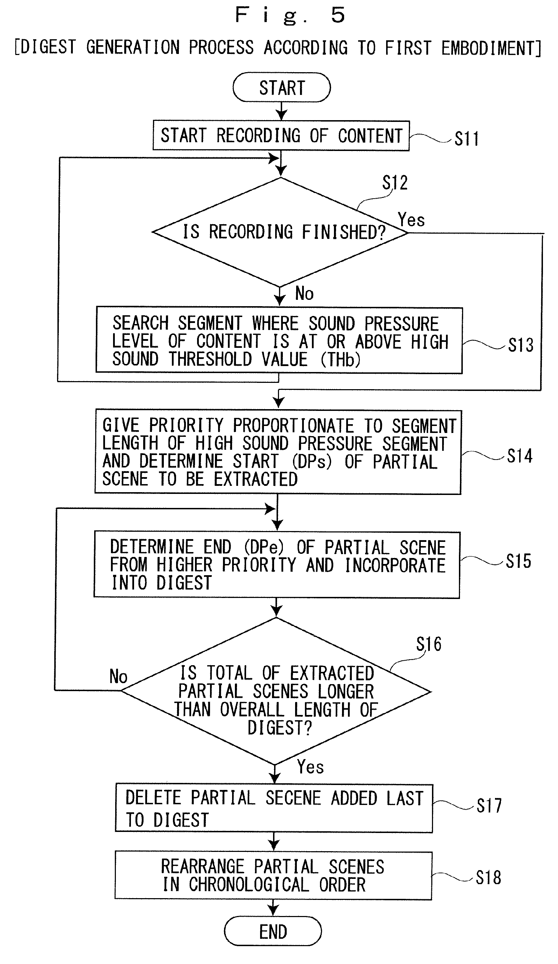

A digest generation process according to the present embodiment by the digest generating unit 33 will now be explained with reference to the flowchart in Fig. 5. As described above, the digest generation process starts with the start of recording (when the recording is instructed by a user, or at the set time in the case of a programmed recording) of the content (S11). Whether the recording is finished is determined periodically (S12). If the recording is not finished (S12: No), a high sound pressure segment where the sound pressure level of the content is at or above the high sound threshold value (THb) is searched (S13). The processes of S12 and S13 correspond to the search process of a high sound pressure segment shown in Fig. 4.

The search is repeated until the recording is finished (S12: Yes). Then, an order of priority in proportion to the segment length hl of the high sound pressure segment is set, and the start (DPs) of the partial scene to be extracted is determined (S14). In other words, in the example of Fig. 3, [DPs2, DPs3, and Dps1] are determined. Then, the end (DPe) of the partial scene is determined in the order of priority, and the partial scene is incorporated into the digest (incorporated into the digest playback information, S15). In other words, in the example of Fig. 3, [DPe2] is determined first, and then the second partial scene is incorporated into the digest.

Every time a partial scene is incorporated into the digest, whether the total of the extracted partial scenes (total of the segment lengths) exceeds the overall length of the digest (total playback time of the digest) is determined (S16). If it does not exceed (S16: No), the end of the partial scene with the next priority is determined, and the partial scene is incorporated into the digest (S15).

When the total of the extracted partial scenes exceeds the overall length of the digest (S16: Yes), the partial scene added last to the digest is deleted (S17). This is because the overall length of the digest is defined to be within a predetermined time in advance. If the time is unlimited (a user may set no limit of the playback time of the digest), all the extracted partial scenes may be incorporated into the digest, instead of S16 and S17. When all the partial scenes are incorporated, if the overall length of the digest is defined within a predetermined time in advance, the process moves onto the next step (S18) even if the predetermined time defined as the overall length of the digest has not been reached.

Then, the partial scene extracted at last is rearranged in chronological order (S18), and the process is finished. In other words, in the example of Fig. 3, while the partial scenes are incorporated into the digest in the order of: the second partial scene, the third partial scene, the first partial scene, they are rearranged into the order of: the first partial scene, the second partial scene, the third partial scene.

As described above, according to the present embodiment, the segment (segment length: tp) from the start (DPs) that is earlier by the predetermined time ta than the start (DHs) of the high sound pressure segment to the end (DPe) that is earlier by the predetermined time tb (ta>tb≥0) than the start (DHs) of the high sound pressure segment is extracted as a partial scene to be incorporated into the digest. Accordingly, a scene before the highlight scene, in other words, a scene that fascinates the user most and an exciting scene can be incorporated into the digest. Because the highlight scene itself (for example, the result of a sport program or the end of a drama) is not included in the digest, the viewing incentive of the user will not be discouraged by watching the generated digest.

In the digest generation process, because the high sound pressure segment is searched along with the recording of the content, when the recording is finished, the searching of the high sound pressure segment has already finished. Accordingly, there is no need to read out the content again for searching the high sound pressure segment after the content is recorded. As a result, the time required for generating the digest can be reduced.

The playback of the digest is carried out by reading out the partial scene corresponding to the digest playback information (which is formed by at least one segment data (data that indicates an address of the start of the partial scene and its segment length)) from the content recorded data. Accordingly, there is no need to generate data for a digest by extracting a part of the content recorded data, and save the generated data separately from the content recorded data. Therefore, the capacity of the memory for saving the digest (digest playback information storage unit 53) is only required to save the digest playback information.

The partial scene to be incorporated into the digest is determined depending on the order of priority according to the segment length of the high sound pressure segment to be referenced for extracting the partial scene. Accordingly, a long highlight scene, in other words, a more exciting scene can be incorporated into the digest preferentially. As a result, the viewing incentive of the user can further be increased.

The extracted plurality of partial scenes are rearranged in chronological order. Accordingly, when the digest is played back, a sense of incongruity caused by continuously playing back partial scenes getting out of sequence can be removed. As a result, the digest closer to a program preview can be generated.

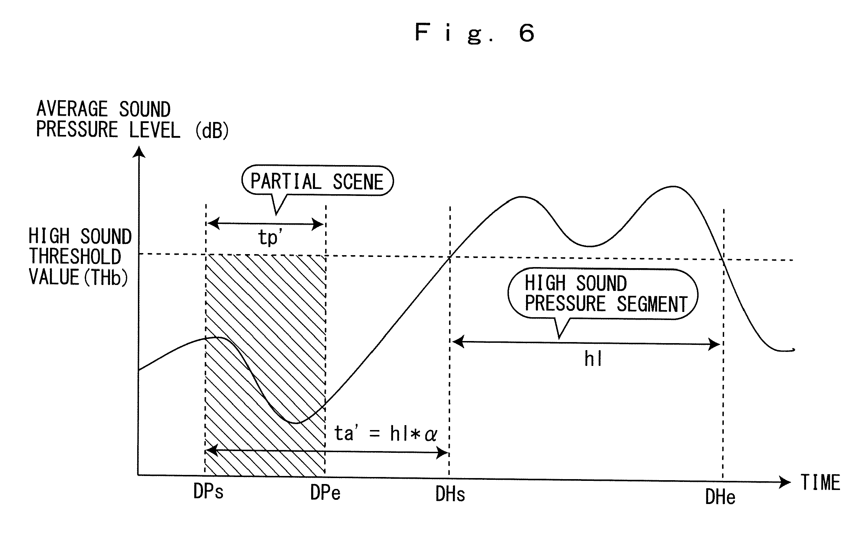

In the above-described example, the partial scene starts at the start (DPs) that is earlier by the predetermined time ta than the start (DHs) of the sound pressure segment (see Fig. 2). Instead, the start (DPs) of the partial scene to be extracted may be determined in proportion to the segment length hl of the high sound pressure segment that is referenced for extraction. This is because, when a highlight scene is long, it is generally considered that the prior scene is also long. In this case, a predetermined time ta' for determining the start (DPs) of the partial scene, as shown in Fig. 6, may be determined by the value calculated by multiplying the segment length hl (hl>0) of the high sound pressure segment by the constant α (0<α≤1) from the start (DHs) of the high sound pressure segment.

In the above-described example, the end (DPe) of the partial scene is the point that is earlier by the predetermined time tb than the start (DHs) of the high sound pressure segment. Instead, as shown in Fig. 6, the end of the partial scene may be determined so as to be the point that a predetermined time tp' (tp≤hl*α) corresponding to the segment length of the partial scene has passed from the start (DPs) of the partial scene.
With this configuration (similarly to the example of Fig. 2), partial scenes of a fixed length (segment length: tp') are extracted regardless of the length of the high sound pressure segment. As a result, when a plurality of partial scenes is included in the digest, a well-balanced digest with a fixed scene length can be generated.

The segment length of the partial scene may not be fixed, but may be varied according to the segment length hl of the high sound pressure segment. In this case, for example, the start (DPs) of the partial scene may be determined according to the segment length hl of the high sound pressure segment (point that is earlier by (hl*α) than the start (DHs) of the high sound pressure segment), and the end (DPe) of the partial scene may be determined so as to be the point that is earlier by the predetermined time tb than the start (DHs) of the high sound pressure segment (not shown). In this case, when the value of the predetermined time tb is 0, the segment length of the partial scene can be determined in proportion to the segment length hl of the high sound pressure segment. With this configuration, a partial scene considered to be fascinating can be played back longer according to the length of the highlight scene, as one scene in the digest.

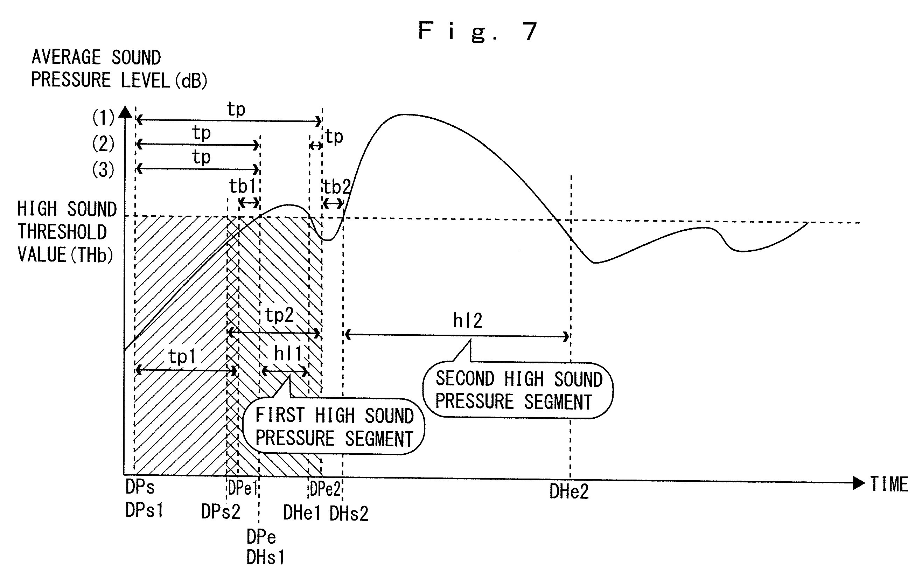

In the above-described example, the partial scene is extracted by referencing to the start (DHs) of the high sound pressure segment. Accordingly, there may be a case where the extracted partial scenes get overlapped depending on the values of the predetermined times ta and tb, and the sound pressure level waveform. As shown in the example of Fig. 7, the latter half of the first partial scene (segment length: tp1, diagonal lines from top right to bottom left) extracted based on the first high sound pressure segment (segment length: hl1) and the first half of the second partial scene (segment length: tp2) extracted based on the second high sound pressure segment (segment length: hl2, diagonal lines from top left to bottom right) are overlapped. In this case, it is preferable to extract from the start (DPs1) of the first partial scene to the end (DPe2) of the second partial scene as one partial scene (see (1) in the diagram).

In the example of the diagram, the second partial scene (start: DPs2, end: DPe2) is overlapped with the first high sound pressure segment (start: DHs1, end: DHe1). Accordingly, it is preferable to delete the overlapped segment (DHs1 to DHe1) from the partial scene (see (2) in the diagram).

After this deletion, the partial scenes extracted are DPs1 to DHs1 and DHe1 to DPe2. However, when the segment length of the extracted partial scene is only a small fraction (to an extent that a human cannot recognize the content by viewing or listening, for example, 2 seconds or less), such as DHe1 to DPe2, it is preferable not to be extracted as a partial scene. Therefore, in the example of Fig. 7, it is preferable to eventually extract the segment DPs1 to DHs1 as the partial scene (segment length: tp, start: DPs, end: DPe) (see (3) in the diagram).

With this configuration, even if the extracted partial scenes are overlapped, the same scenes will not be included in the digest in an overlapping manner. When the high sound pressure segment is included in the extracted partial scene, the scene overlapped with the high sound pressure segment will be extracted. Because the result of the content is not learned, the viewing incentive of the user will not be discouraged. Moreover, because a small fraction of the scene is not extracted, the digest with which the user will not have a sense of incongruity can be generated.

In the above-described example, the data (segment data) that indicates the address of the start of each segment and the segment length of the high sound pressure segment, the partial scene (digest playback information), and the like is stored. The start and the end of each segment may be stored instead.

In the above-described example, as shown in Fig. 3, a higher priority is given to a partial scene with a longer segment length of the high sound pressure segment. On the contrary, a scene with a short segment length of the high sound pressure segment may be given higher priority. With this configuration, by preferentially incorporating a scene with a short highlight scene into the digest, the digest with which the ending of the content is harder to guess can be generated.

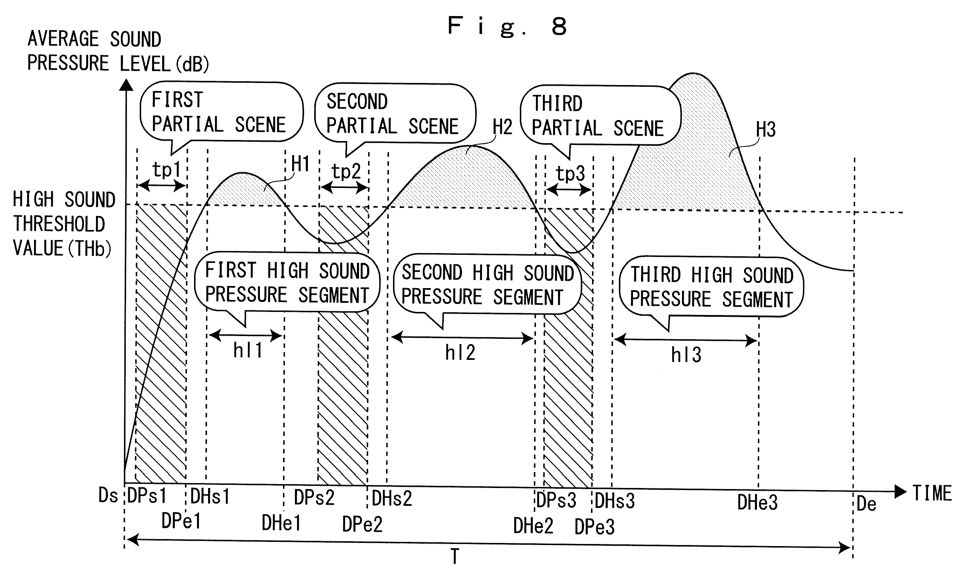

As shown in Fig. 8, not only is a scene with the long segment length hl given priority, but the priority may be determined depending on the value of the sound pressure level exceeding the high sound threshold value (THb). In other words, the priority may be determined by the sum total (corresponds to an area of shaded sections H1, H2, and H3 in the diagram) of the sound pressure level at per unit time in the high sound pressure segment. Therefore, as shown in the example of Fig. 8, the priority is in the order of: the third partial scene, the second partial scene, the first partial scene. With this configuration, the partial scene to be extracted may be determined not only by the length of excitement, but by the extent of excitement.

In the above-described example, the high sound pressure segment is searched based on the sound pressure level. When associated information such as metadata is associated with the content, the highlight scene may be searched also based on the metadata. The "metadata" includes not only information related to description of what is in the entire content, the creator, the copyright, and the like, but also detailed information of each scene included in the content (for example, if the content is a video of a soccer game, information showing the flow of the game, such as ball shooting and corner kicks). A highlight scene may be searched using the detailed information of each scene, and a partial scene may be extracted based on the highlight scene. With this configuration, a highlight scene can be searched more accurately.

The highlight scene may be searched, based not only on the metadata, but also on video information. In this case, for example, by using video analysis, it is preferable to examine, for example, a scene including a face region, a scene with quick scene changes, and a scene with character information such as a subtitle in a video, and then preferentially include the scenes in the partial scene.

While in the above-described example, the scene prior to the high sound pressure segment is extracted as a partial scene of the digest, the scene subsequent to the high sound pressure segment may also be extracted as a partial scene. In other words, any scene in the remaining segments excluding the high sound pressure segment from the entire content segment may be extracted as a partial scene.

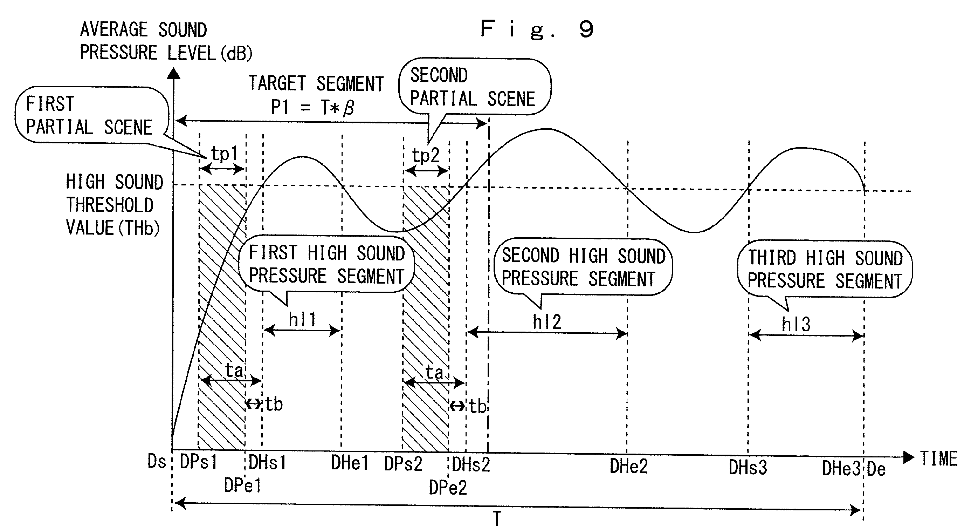

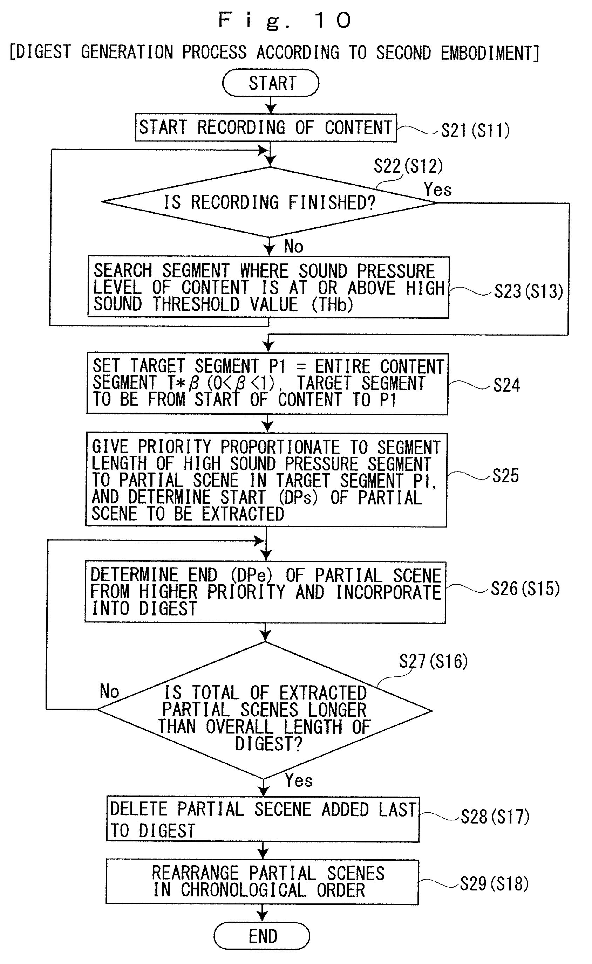

Next, a second embodiment of the present invention will now be explained with reference to Figs. 9 and 10. In the above-described embodiment, the partial scene being an element for generating a digest with respect to the entire content segment is extracted. In the present embodiment, a target segment for extracting a partial scene will be limited. The different points from the first embodiment will mainly be explained.

Fig. 9 is an example of a sound pressure level waveform for explaining the present embodiment. In the present embodiment, a segment (segment length: P1=T*β) starting from the start Ds of the entire content segment (segment length: T) and lasting for a time acquired by multiplying the entire content segment T by a constant β (0<β<1) is determined as a target segment. It is preferable that the value of β be approximately 0.5 to 0.7.

Therefore, in the example of the diagram, only two partial scenes (first partial scene and second partial scene, diagonal lines in the diagram) that are in the target segment are extracted, among three partial scenes (first partial scene to third partial scene) extracted based on the three high sound pressure segments (first high sound pressure segment to third high sound pressure segment) included in the entire content segment. The process from determining the target segment to extracting a partial scene will be executed in the partial scene extracting unit 32 in the block configuration diagram shown in Fig. 1.

A digest generation process of the present embodiment by the digest generating unit 33 will now be explained with reference to the flowchart in Fig. 10. The reference numerals at each process shown in brackets mean that they are the same processes as to the reference numerals shown in the flowchart in Fig. 5. Therefore, the detailed description thereof will be omitted.

In the present embodiment, the digest generation process also starts with the start of recording of the content (S21). Until the recording is finished, a high sound pressure segment where the sound pressure level of the content is at or above the high sound threshold value (THb) is searched (S22 and S23).

When the recording is finished (S22: Yes), a segment length P1 of the target segment is calculated from the formula: P1= Entire content segment T * Constant β, and the target segment from the start Ds of the content to the point up till the segment length P1 will be determined (S24). Then, with respect to the partial scenes (first partial scene and second partial scene in the example of Fig. 9) that are in the target segment, the priority is given in proportion to the segment lengths (hl1 and hl2) of the high sound pressure segments (first high sound pressure segment and second high sound pressure segment) that are referenced for extracting the partial scenes, thereby determining the start of the partial scene to be extracted (S25). In other words, in the example of Fig. 9, because hl2>hl1, [DPs2 and DPs1] are determined. The end (DPe) of the partial scene is determined from a scene with higher priority, and the partial scene is incorporated into the digest (S26). In other words, in the example of Fig. 9, [DPe2] is determined first, and then the second partial scene is incorporated into the digest.

S26 and S27 are repeated every time a partial scene is incorporated into the digest until the total (total of segment lengths) of the extracted partial scenes exceeds the overall length of the digest. When the total of the extracted partial scenes exceeds the overall length of the digest (S27: Yes), the partial scene added last to the digest will be deleted (S28). Then, the extracted partial scenes are rearranged in chronological order (S29), and the process is finished.

As described above, according to the present embodiment, the target segment to extract the partial scene can be narrowed down from the entire content segment. For example, when the result of a sport program is not desired to be included in the digest, the result of the game can be excluded from the digest without fail by narrowing down the target segment to the first half of the entire content segment (time having the segment length P1 obtained by multiplying the segment length T of the entire content segment by the constant β (0<β<1)).

In the above-described example, the target segment is from the start of the content to the point that the segment length P1 has passed. Instead, the target segment may be any segment, such as the middle or the latter half of the content. Also, the target segment is not limited to only one segment, but may be a plurality of segments.

In the above-described example, the extraction target is where the partial scene is included in the target segment. Instead, if only a part of the partial scene is included in the target segment (in other words, even a part of the partial scene is not included in the target segment), the start to the end of the partial scene may be extracted. On the contrary, when the entire partial scene is not included in the target segment, the partial scene may not be extracted. Instead, whether to extract may be determined based on a proportion of a part of the partial scene included in the target segment.

The extraction may not be determined by the partial scene but by whether a high sound pressure segment is included in the target segment. For example, if the extraction target is where the entire high sound pressure segment is included in the target segment, because the entire second high sound pressure segment (start DHs2, end DHe2) is not included in the target segment in the example shown in Fig. 9, only the first partial scene (segment length: tp1, start DPs1, end DPe1) based on the first high sound pressure segment (start DHs1, end DHe1) that is in the target segment is extracted.

Other various modifications disclosed in the first embodiment may also be applied to the present embodiment.

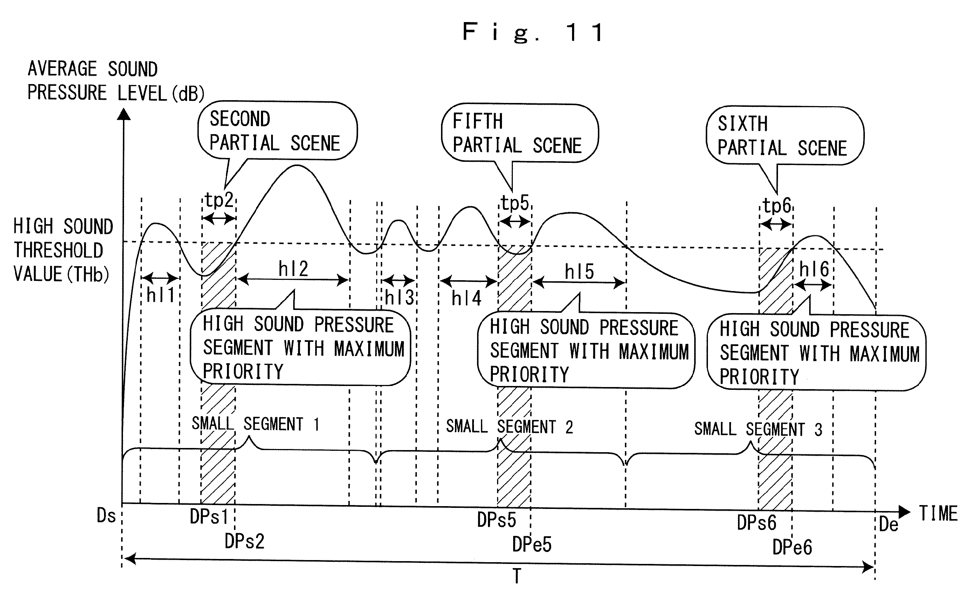

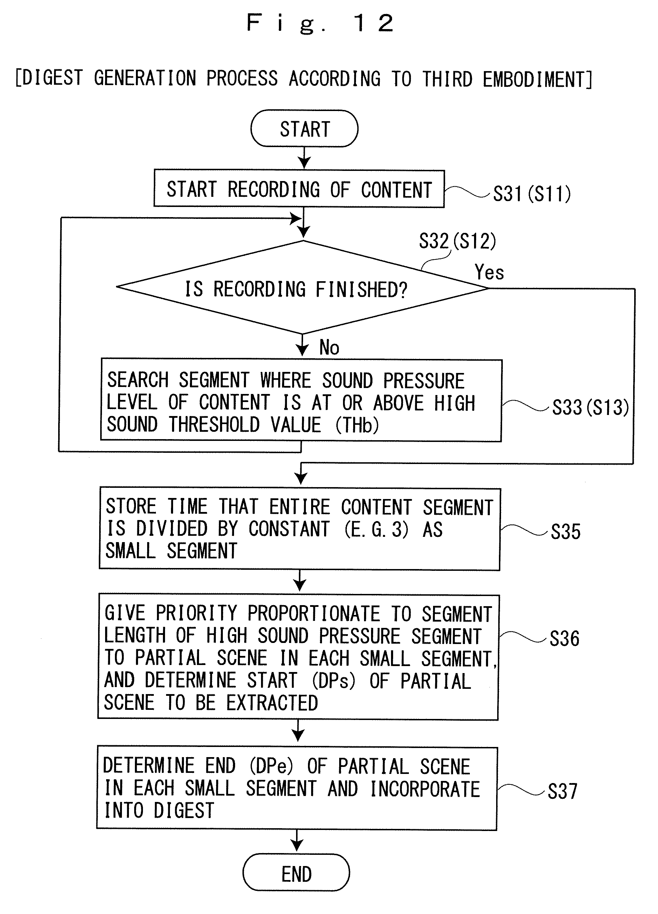

Next, a third embodiment of the present invention will now be described with reference to Figs. 11 and 12. In the present embodiment, the entire content segment is divided into a plurality of small segments and at least one partial scene is extracted from each small segment. The different points from the above-described embodiments will mainly be explained.

Fig. 11 is an example of a sound pressure level waveform for explaining the present embodiment. In the present embodiment, the entire content segment (segment length: T, start: Ds, and end: De) is divided into three small segments. The number of the segments may be set arbitrarily, but there is no point in setting too many. This is because, for example, if the number of segments is set to 10 when the overall length of the digest is set to 18 seconds and the length of the partial scene is set to 6 seconds, the partial scene is eventually extracted from disproportionate positions. Therefore, in the present embodiment, an appropriate number of segments are determined based on the overall length of the digest and the length of the partial scene.

An example of Fig. 11 is a case where the entire content segment is divided by three segments calculated by the maximum value of γ that corresponds to 18/6≥γ (γ: an integer equal to or more than 1), when the overall length of the digest is set to 18 seconds and the length of the partial scene is set to 6 seconds. The example of the diagram shows when a scene immediately before the high sound pressure segment is extracted as a partial scene (segment length tp of the partial scene: when calculated by tp=ta-tb, the value of tb is 0, see Fig. 2).

The extraction of the partial scene after dividing the entire content segment into three small segments also gives priority to a scene with the long segment length of the high sound pressure segment, as in the above-described embodiment. In other words, as for a small segment 1 including two high sound pressure segments (segment length: hl1, segment length: hl2), a second partial scene (segment length: tp2) based on the high sound pressure segment with the long segment length (segment length: hl2) is given priority to be extracted. As for a small segment 2 including three high sound pressure segments (segment length: hl3, segment length: hl4, segment length hl5), a fifth partial scene (segment length: tp5) based on the high sound pressure segment with the long segment length (segment length: hl5) is given priority to be extracted. As for a small segment 3 including only one high sound pressure segment (segment length: hl6), regardless of its segment length, the partial scene (segment length: tp6) based on the high sound pressure segment (segment length: hl6) is extracted.

In this manner, in the present embodiment, when a small segment is not set, even if the priority of the partial scene (segment length: tp6) is considered to be low, because no other partial scenes exist in the small segment 3, the partial scene has the maximum priority. In other words, each partial scene is incorporated into the digest in the order of the second partial scene (segment length: tp2) based on the high sound pressure segment (segment length: hl2) that has the maximum priority in the small segment 1, the fifth partial scene (segment length: tp5) based on the high sound pressure segment (segment length: hl5) that has the maximum priority in the small segment 2, and the sixth partial scene (segment length: tp6) based on the high sound pressure segment (segment length: hl6) that has the maximum priority in the small segment 3. The process from dividing into small segments (determining each small segment) to extracting the partial scene is executed in the partial scene extracting unit 32 in the block configuration diagram shown in Fig. 1.

A digest generation process of the present embodiment by the digest generating unit 33 will now be explained with reference to the flowchart in Fig. 12. The reference numerals at each process shown in brackets mean that they are the same processes as the reference numerals shown in the flowchart in Fig. 5. Therefore, the detailed description thereof will be omitted.

Also in the present embodiment, the digest generation process starts with the start of recording of the content (S31). Until the recording is finished, a high sound pressure segment where the sound pressure level of the content is at or above the high sound threshold value (THb) is searched (S32 and S33).

When the recording of the content is finished (S32: Yes), the time obtained by dividing the entire content segment by a constant ("3" in the example of Fig. 11) is stored in the storage section 50 (see Fig. 1) as a small segment (S35). Then, with respect to the partial scene that is in each small segment, priority is given in proportion to the segment length of the high sound pressure segment that is referenced for extracting the partial scenes, and the start of the partial scene to be extracted is determined (S36). In other words, in the example of Fig. 11, the starts [DPs2, DPs5, and DPs6] of the three partial scenes are determined from the small segment 1, the small segment 2, and the small segment 3. The end (DPe) of the partial scene that is in each small segment is also determined and each partial scene is incorporated into the digest (S37). In other words, in the example of Fig. 11, the ends [DPe2, DPe5, and DPe6] of the three partial scenes are determined first, and each partial scene is then incorporated into the digest.

As described above, according to the present embodiment, the entire content segment is divided into a plurality of small segments, and at least one partial scene is extracted from each small segment. Accordingly, the partial scene can be extracted from the entire content segment in a balanced manner. In other words, even if there is a long highlight scene in a part of the content, a digest that only includes the partial scenes extracted based on the highlight scene will not be generated.

In the above-described example, the entire content segment is divided into a plurality of small segments. Instead, the target segment shown in the second embodiment (for example, the point where the segment length P1 (P1=T*β) has passed from the start of the content) may be divided into a plurality of small segments. With this configuration, the result of the content will not be included in the digest, and the partial scene can be extracted from the target segment that does not include the result of the content in a balanced manner.

while the small segments are determined by equally dividing the entire content segment, the segment length of each small segment may be changed.

A partial scene of the maximum priority is extracted from a plurality of small segments in chronological order (in the example of Fig. 11, partial scenes are extracted in the order of: the small segment 1, the small segment 2, the small segment 3). Instead, the segment length of the high sound pressure segment of the maximum priority may be compared in each small segment, and a scene with the long segment length may preferentially be incorporated into the digest. In other word, in the example of Fig. 11, because hl2>hl5>hl6, the partial scenes are incorporated in the order of: the second partial scene, the fifth partial scene, the sixth partial scene. If the partial scenes extracted at this time are not incorporated in chronological order, they may be rearranged in chronological order.

In the above-described example, the number of segments is the integer at or below the value obtained by dividing the entire length of the digest by the length of the partial scene. Instead, it is not limited to this formula, but a formula under various conditions may also be used.

In the above-described example, the extraction target in each small segment is where a partial scene and a high sound pressure segment are included in the target segment. Instead, the extraction target may be where either a partial scene or a high sound pressure segment is included, or when the partial scene or the high sound pressure segment exists so as to extend over the segments, they may not be targeted.

Other various modifications disclosed in the above-described embodiments may also be applied to the present embodiment.

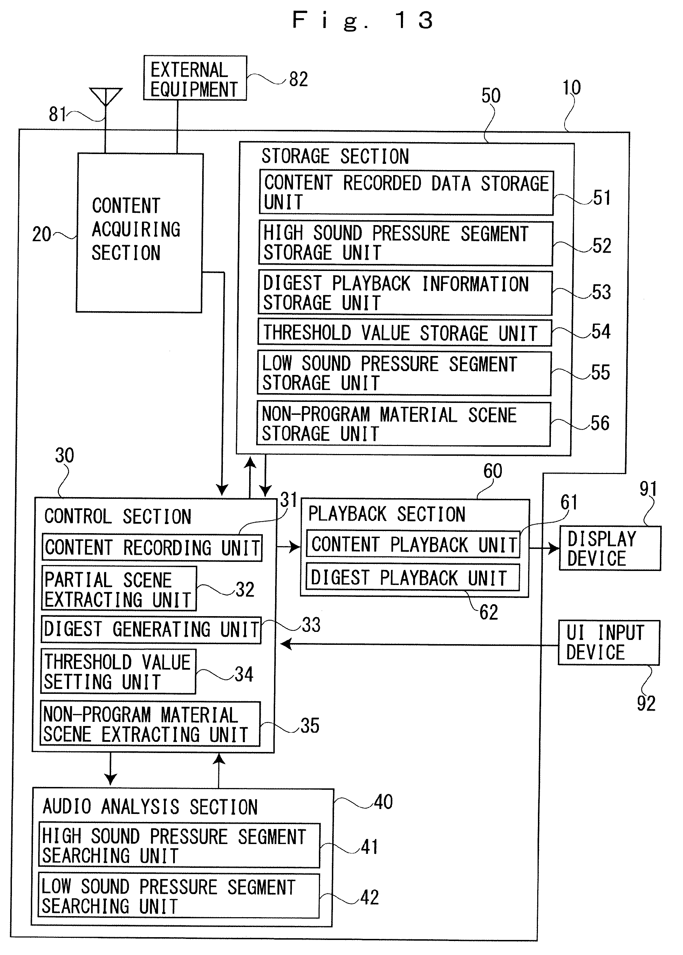

Next, a fourth embodiment of the present invention will now be explained with reference to Figs. 13 through 15. In the present embodiment, a non-program material scene including a commercial scene is extracted from the entire content segment, and a predetermined segment immediately after the extracted non-program material scene is preferentially extracted as a partial scene. The different points from the above-described embodiments will mainly be explained.

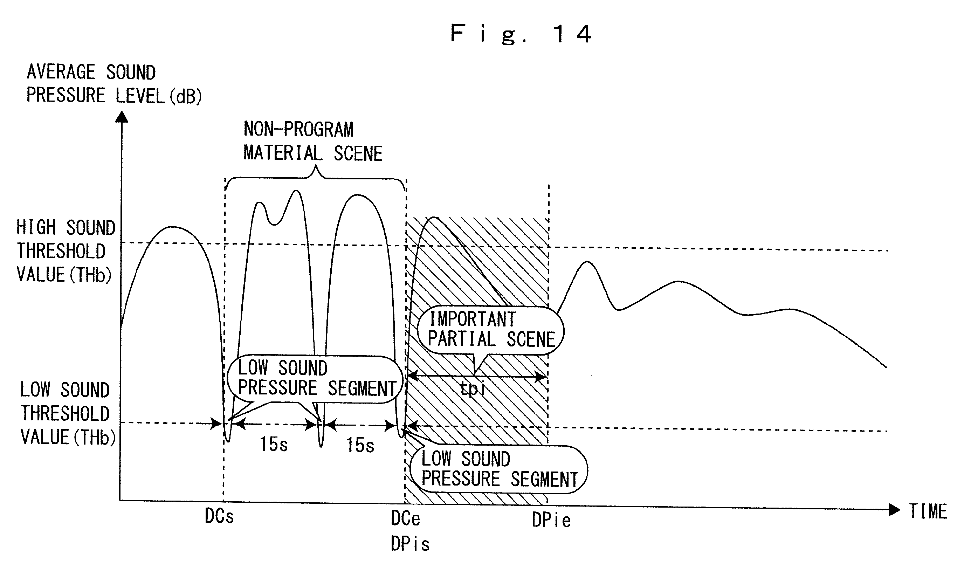

Fig. 13 is a block configuration diagram according to the present embodiment. Fig. 14 is an example of a sound pressure level waveform for explaining the present embodiment. As shown in Fig. 13, the recording and playback device 10 according to the present invention is different from the block configuration diagram of the first embodiment in that it includes a non-program material scene extracting unit 35 in the control section 30, a low sound pressure segment searching unit 42 in the audio analysis section 40, and a low sound pressure segment storage unit 55 and a non-program material scene storage unit 56 in the storage section 50.

The low sound pressure segment searching unit 42 searches a low sound pressure segment where the sound pressure level calculated based on audio information is at or below a predetermined low sound threshold value (THs) from the content (see Fig. 14). The predetermined low sound threshold value (THs) is based on a set value by the threshold value setting unit 34, and if not set specifically, set at a default. The process operated by the low sound pressure segment searching unit 42 corresponds to the process of searching a high sound pressure segment shown in Fig. 4 in which the "high sound pressure segment" is changed to the "low sound pressure segment", and "at or above the high sound threshold value" is changed to "at or low sound threshold value". In other words, because the substantial processing contents are the same, the detailed description thereof will be omitted.

The low sound pressure segment storage unit 55 stores the search result of the low sound pressure segment searching unit 42, in other words, the data indicating the address of the start of each low sound pressure segment and its segment length.

The non-program material scene extracting unit 35 extracts a non-program material scene from the entire content segment, based on the search result of the high sound pressure segment searching unit 41 and the low sound pressure segment searching unit 42. More particularly, based on the data stored in the low sound pressure segment storage unit 55, a segment where low sound pressure segments exist at a predetermined interval (such as a 15-second interval) is determined to be a commercial scene, and the start (DCs) of the first low sound pressure segment to the end (DCe) of the last low sound pressure segment is extracted as a non-program material scene (see Fig 14).

The non-program material scene storage unit 56 stores the extraction result of the non-program material scene extracting unit 35, in other words, the data that indicates the address of the start of each non-program material scene and its segment length. The non-program material scene refers to a segment considered not to be a program material of a content, such as a commercial scene, a weather forecast, and a segment of a program.

The partial scene extracting unit 32 according to the present embodiment, as shown in Fig. 14, extracts a predetermined segment immediately after the non-program material scene extracted by the non-program material scene extracting unit 35, as an important partial scene (segment length: tpi, start: DPis, end: DPie).

The digest generating unit 33 according to the present embodiment sets the priority of the important partial scene immediately after the non-program material scene to the maximum value, and generates digest playback information (incorporate into the digest). This is because, for example, when the content is a cartoon program, a title and a subtitle of the cartoon are often displayed immediately after commercial messages. By including these in the digest, a user can understand the content more accurately. When a plurality of important partial scenes is extracted from one content, the priority is determined in chronological order. In other words, when a program is recorded from 0 o'clock to 1 o'clock and commercial messages run every 15 minutes, the scene immediately after the commercial message around 0:15 is extracted as an important partial scene with the maximum priority, and the scene immediately after the commercial message around 0:30 is extracted as an important partial scene with the secondary priority.

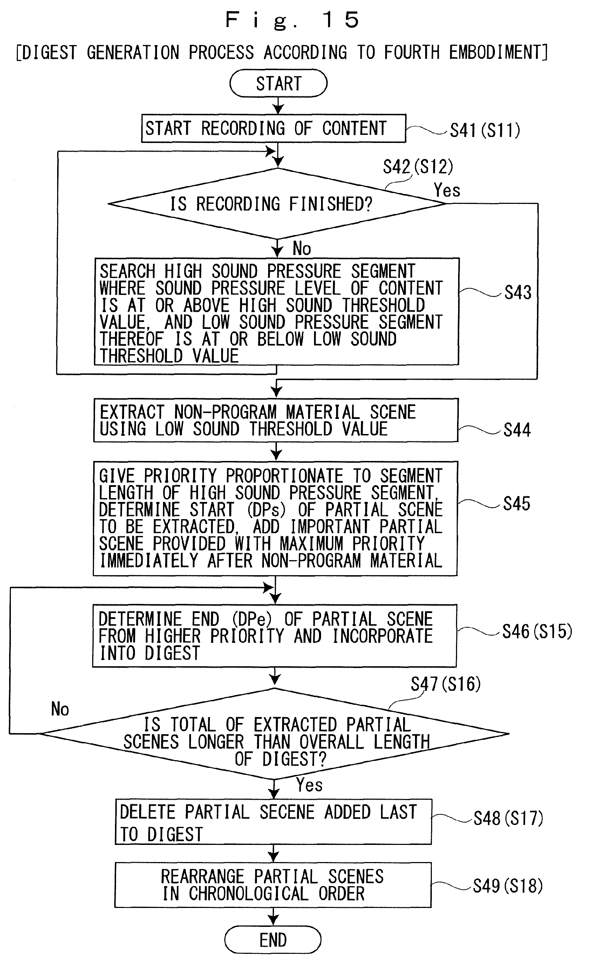

A digest generation process according to the present embodiment by the digest generating unit 33 will now be explained with reference to the flowchart in Fig. 15. The reference numerals at each process shown in brackets mean that they are the same process as to the reference numerals shown in the flowchart in Fig. 5. Therefore, the detailed description thereof will be omitted.

In the present embodiment, the digest generation process also starts with the start of recording of the content (S41). Until the recording is finished, a high sound pressure segment where the sound pressure level of the content is at or above the high sound threshold value (THb) and the low sound pressure segment where the sound pressure level is at or below the low sound threshold value (THs) are searched (S42 and S43).

When the recording is finished (S42: Yes), a non-program material scene is extracted based on the search result of low sound pressure segments (S44). The partial scenes are then extracted and the priority is given to the partial scenes based on the search result of high sound pressure segments. Important partial scenes are also extracted from the detection result of non-program material scenes, and their priority is set to the maximum. The starts (DPs, DPis) of the respective partial scenes are determined according to the priority (S45). In the order of higher priority, the ends (DPe, DPie) of the partial scenes are determined and incorporated into the digest (S46). In other words, when the important partial scene is present as in the example of Fig. 14, the start [DPis] of the important partial scene and the end [DPie] of the important partial scene are determined first, and then the important partial scene is incorporated into the digest.

S46 and S47 are repeated every time the partial scene is incorporated into the digest, until the total of the extracted partial scenes (total of segment lengths) exceeds the overall length of the digest. When the total of the extracted partial scenes (including important partial scenes) exceeds the overall length of the digest (S47: Yes), the partial scene added last to the digest is deleted (S48). The extracted partial scenes are then rearranged in chronological order (S49), and the process is finished.

As described above, according to the present embodiment, a non-program material scene including a commercial scene is extracted based on the search result of low sound pressure segments, and the scene immediately afterwards can be preferentially included in the digest as an important partial scene. Because this allows the user to confirm the narration and an important scene such as to indicate a summary of the content by viewing the digest, he/she can further understand the content.

As shown in the first embodiment to the third embodiment, when a part or all of each partial scene extracted by referring to the high sound pressure segment is overlapped with the non-program material scene, it is preferable to delete the overlapped scene from each partial scene. With this configuration, a non-program material scene such as a commercial scene will not be included in the digest, thereby enabling to generate a more appropriate digest.

While in the above-described example, the segment having low sound pressure segments at a predetermined interval is extracted as a non-program material scene, other various commercial message detection methods that have been developed may also be used together to extract a non-program material scene. In other words, a commercial scene detected depending on a change a change of scenes based on video information or a broadcasting mode mode (whether a bilingual broadcast, whether a stereo broadcast and the like) may be extracted as a non-program material scene.

Other various modifications disclosed in the above-described embodiments may also be applied to the present embodiment.

As explained in the first embodiment to the fourth embodiment, according to the present invention, a digest that will not discourage the viewing incentive of the user for the content may be generated, by extracting a scene before a highlight scene (high sound pressure segment) as a partial scene to be included in the digest. In addition, by extracting a partial scene from a target segment excluding the last half of the content and the like, a situation of learning the result of the content from the digest can be prevented. By dividing the entire content segment into small segments and extracting a partial scene from each small segment, a digest including the partial scenes extracted from the entire content in a balanced manner can be generated. By extracting a scene immediately after a commercial scene (non-program material scene) as an important partial scene, a digest that includes a scene considered to be important to understand the content, although the result of the content cannot be learned, can be generated.

In the above-described each embodiment, the explanation is made for generating the digest of the content including both video information and audio information. The present invention can also be applied for a content that only includes audio information (music and radio programs, for example). The present invention can also be applied for a content that only includes video information and does not include audio information (silent movies, for example). In the case of such a content that only includes video information, a highlight scene is detected based on the video analysis result of the video information and/or the metadata explained in the latter half of the first embodiment, and a partial scene is extracted based on the detection result.

Also, each section, unit, and function included in the recording and playback device 10 according to each of the embodiments can be provided as a program. The program can also be stored and provided in a recording medium (not shown). Examples of such recording medium include: a CD-ROM, a flash ROM, a memory card (a compact flash (trade mark), smart media, a memory stick, and the like), a compact disk, a magneto-optical disk, a digital versatile disk, a flexible disk, and a hard disk.

The device configuration, the processing steps, and the like may not be limited to the above-described embodiments, but may be modified suitably within the spirit and scope of the present invention. The digest generation function of the present invention may be installed on a video recorder, a DVD recorder, a personal computer, and the like, other than the recording and playback device 10.

## Claims

1. A digest generating device comprising:
content acquiring means that acquires a content including at least one of video information and audio information;
highlight segment searching means that searches a highlight segment including a highlight scene from an entire content segment along a time axis of the acquired content, based on at least one of the video information and the audio information;
partial scene extracting means that extracts a partial scene being an element for generating a digest of the content, from a remaining segment excluding the highlight segment from the entire content segment; and
digest generating means that generates the digest by using the extracted partial scene.

2. The digest generating device according to claim 1, further comprising:
recording means that records the acquired content; wherein
the highlight segment searching means searches the highlight segment in synchronism with the recording by the recording means.

3. The digest generating device according to claim 2, further comprising:
digest playback means that plays back the digest;
the digest generating means generates digest playback information formed by segment data that indicates an address of start of the extracted partial scene and a segment length of the partial scene; and
the digest playback means plays back the digest based on the digest playback information and recorded data of the content by the recording means.

4. The digest generating device according to claim 1, wherein
metadata recorded in each scene is associated with the content, and
the highlight segment searching means searches the highlight segment based on the metadata as well as at least one of the video information and the audio information.

5. The digest generating device according to claim 1, wherein the content includes the audio information,
the highlight segment searching means searches a high sound pressure segment in which a sound pressure level calculated based on the audio information is at or above a predetermined high sound threshold value as the highlight segment, and
the partial scene extracting unit extracts the partial scene from a start that is earlier by a predetermined time ta (ta>0) than start of the highlight segment.

6. The digest generating device according to claim 5, wherein the predetermined time ta is a time obtained by multiplying a segment length hl (hl>0) of the highlight segment by a constant **α** (0<**α**≤1).

7. The digest generating device according to claim 5, wherein end of the partial scene is a point that is earlier by a predetermined time tb (0≤tb<ta) than the start of the highlight segment.

8. The digest generating device according to claim 5, wherein end of the partial scene is a point that a predetermined time tp (tp≤hl***α**) corresponding to a segment length of the partial scene has passed from the start of the partial scene.

9. The digest generating device according to claim 5, wherein when a plurality of the highlight segments are detected by the highlight segment searching means, the digest generating means sets a priority to the extracted partial scenes according to a segment length of each highlight segment to be referenced for extracting each partial scene, and incorporates the partial scene with higher priority as the element in the digest.

10. The digest generating device according to claim 5, further comprising:
threshold value setting means that sets the high sound threshold value.

11. The digest generating device according to claim 9, wherein when a part or all of at least two partial scenes among a plurality of partial scenes extracted by the partial scene extracting means are overlapped, the digest generating means incorporates the overlapped two or more partial scenes as one continuous partial scene.

12. The digest generating device according to claim 1, wherein the digest generating means rearranges, when generating the digest by using a plurality of partial scenes, the plurality of partial scenes in chronological order.

13. The digest generating device according to claim 1, wherein the partial scene extracting means extracts the partial scene from a target segment that is any segment within the entire content segment.

14. The digest generating device according to claim 13, wherein the target segment starts from start of the content and last for a time obtained by multiplying the entire content segment by a constant β (0<β<1).

15. The digest generating device according to claim 13, wherein
the partial scene extracting means divides the entire content segment or the target segment into a plurality of small segments, and extracts at least one of the partial scene from each small segment.

16. A program that enables a computer to function as each means in the digest generating device according to any one of claims 1 through 15.
